# EUROPEAN PATENT APPLICATION

(11) **EP 4 518 056 A1**
(43) Date of publication of application: **05.03.2025**
(21) Application number: 23306440.1
(22) Date of filing: 31.08.2023
(51) Int. Cl.: H02G 1/12, B26D 7/26

(54) **REMOVAL OF INSULATION SHEATH FROM POWER CABLE**

(71) Applicant: Nexans, 92400 Courbevoie (FR)
(72) Inventor: DOEDENS, Espen, 1788 Halden (NO); FRISK, Nils-Bertil, 45297 Strömstad (NO)
(74) Representative: Ipsilon

(57) **Abstract**

A rotational cutting device is provided for the removal of material (101) from an insulation sheath (3, 4, 5) of a power cable (1). The device comprises a knife assembly (301) and a rotation mechanism (308) for rotational movement of the knife assembly (301) relative to the power cable (1). The knife assembly (301) has knife (300) including a cutting edge for peeling off material (101) of the insulation sheath (3, 4, 5). The cutting edge is provided by a removable cutting blade (303) that can be detached from the knife (300) in order to replace it.

## Description

### Field of the invention

The present invention relates to rotational cutting devices for the removal of material from an insulation sheath of a power cable as well as to methods of such removal. The invention particularly relates to medium and high voltage cables, such as subsea cables for transmission of high voltage direct current (HVDC) or high voltage alternating current (HVAC).

### Background

It is known to use medium and high voltage cables for various purposes including subsea electrical transmission. The conductor in such cables is typically made from copper or aluminium and consists of a circular centre wire surrounded by concentric layers of wires. The strands are wound in a spiral, typically with layers being wound in alternating directions, e.g. the first layer is wound in a clockwise spiral, the next layer wound in a counterclockwise spiral and so on. This provides the cable with improved flexibility. The conductor is surrounded by an insulation sheath comprising a plurality of insulating/protective layers, in most cases comprising an inner semiconductive layer (ISC), an insulation layer (INS), and an outer semiconductive layer (OSC).

For various reasons it is necessary to remove the insulation sheath from a cable end or from a midsection of the cable. For example, when joining cables together then it is typical to remove a portion of the insulation sheath at the cut end of the cable to expose a region of the conductors so that they can be joined, before the insulation sheath is replaced such as by using a flexible factory joint. Accessories may be installed at a midsection of the cable, which requires the conductor to be accessed by removal of the insulation sheath at that part of the cable.

At the current time the removal of insulation sheaths, e.g. during joint & other accessory installations, uses a range of peeling/stripping tools to:
- Remove the outer-semiconductive layer of the cable.
- Shape cones, i.e. forming tapered sections of the layers in the insulation sheath.
- Cut and slot the insulation surface inwards.
- Carry out other operations in the insulation sheath or its outer layers.

The different cutting operations needed make use of a special cutting tool, where each cutting tool features a cutting edge tailormade for the particular operation. A rotational peeling machine holds the cutting tool and is configured to rotate the cutting tool relative to the power cable so as to carry out a peeling action. When the operation involves shaping cones then this can be envisaged in a way similar to the use of a pencil sharpener. The cutting edges generally feature the following characteristics (amongst others):
- Overall size, typically a thin parallelogram with sharpened edges.
- A 3D orientation of the cutting edge (angle and position), when mounted in the cutting tool, in relation to the object to be cut.
- Length/width of the active area of the cutting edge (the part that is actively cutting away material)
- Angle of the cutting edge
- Material type (stainless, hardened steel, tungsten, ...)
- Sharpness

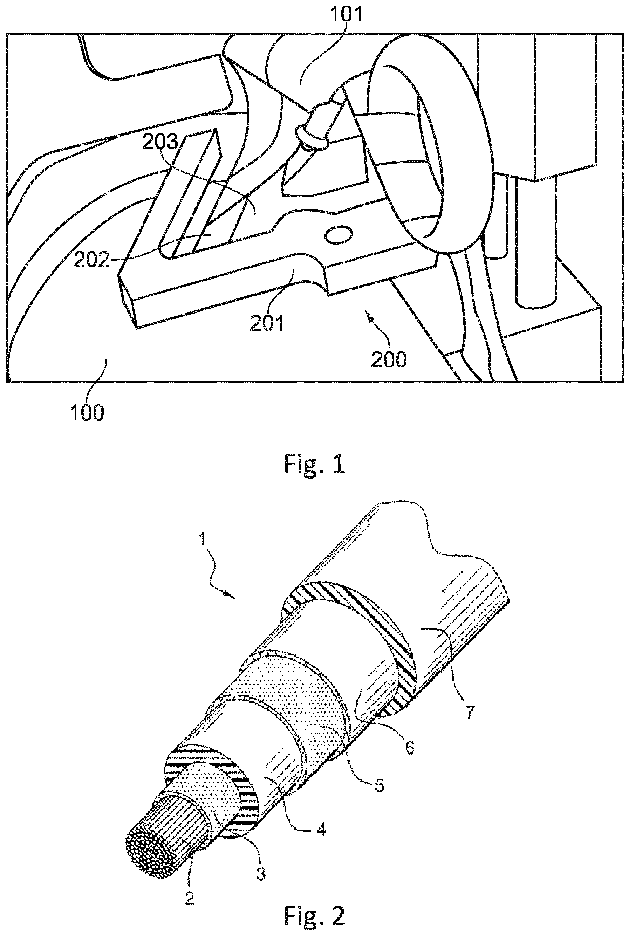

An example of a known rotational peeling tool, as provided by ALROC SAS of France, is shown in Figure 1. Similar tools are provided by HIVOTECH AG of Switzerland. As seen in the Figure, a power cable 100 is held in a cutting machine 200. The power cable 100 can be a cable of the type discussed below in relation to Figure 2. The cutting machine 200 has a knife assembly 201 comprising a knife 203 with an integrated cutting edge 202. This slices through the surface of an insulation sheath on the power cable 100 and, when there is rotational movement of the knife assembly 201 relative to the power cable 101 then the cutting edge 202 will slice off a peeling 101 of the material that forms the insulation sheath. The rotational peeling tool includes a mechanism (not shown) for rotating the knife assembly 201 relative to the power cable 100. This can be a manual mechanism or a motorised mechanism. Different forms of knife assembly 201 can be used for different operations. It is usually possible to adjust the height of the knife 203 and location of the clamping onto the power cable 100. However, the angle of the cutting edge 202 is fixed in order to ensure the right angle for peeling off the material. When the cutting edge 202 is dulled then the knife 203 is replaced.

### Summary of the invention

Viewed from a first aspect, the present invention relates to a rotational cutting device for the removal of material from an insulation sheath of a power cable, the device comprising:
- a knife assembly having a knife comprising a cutting edge for peeling off material from the insulation sheath; and
- a rotation mechanism for rotational movement of the knife assembly relative to the power cable;
wherein the cutting edge of the knife is provided by a removable cutting blade. Hence, the cutting blade can be detached from the knife in order to replace it.

This device has advantages over the known devices because rather than a need to replace the knife as a whole, as has been the longstanding practice, the cutting edge can be replaced instantly by removal and replacement of the cutting blade. The inventors have realised that having a cutting edge integrated with the knife creates inefficiencies, and that it is possible to source and fit suitable replaceable cutting blades in large numbers and at a cost that permits very frequent replacement whilst still offering a saving over traditional systems. Thus, another way to describe the knife of the first aspect is that it does not have an integrally formed cutting edge, in contrast to the prior art knife of Figure 1. Using a replaceable cutting blade leads to sharper cutting edges and consequently better-quality cutting.

The cutting blades can be sourced based on advanced cutting edge/blade manufacturing techniques that may already be used in different industries (e.g. microtomy, surgery and other similar technologies), but which have not before been envisaged as a source of cutting blades for insulating sheaths of power cables. The cutting blade may thus be a microtomy blade or a surgical blade (e.g. a scalpel blade).

The cutting blade may require added structural support to perform its cutting function and/or may for example be more flexible and/or weaker (e.g. more brittle) than the knife as a whole. For example, the torsional stiffness of the knife as a whole may be greater than the torsional stiffness of the replaceable cutting blade (when detached from the knife), whilst the cutting blade can be supported by the structure of the knife during use so that the cutting edge behaves in a similar way to the cutting edge of known knives. In some examples the torsional stiffness of the knife may be at least 5 times greater, optionally at least 10 times greater, or optionally at least 50 times greater, than the torsional stiffness of the cutting blade. In this regard the torsional stiffness may be measured on basis of the twist angle per unit length (of the knife or of the cutting blade) that is caused by an axial moment of a given magnitude, where the stiffness is the equivalent to the moment divided by the twist angle. Alternatively, or additionally, the toughness of the main part of the knife (e.g. toughness of a cutting blade holder as discussed below) may be greater than the toughness of the replaceable cutting blade. Thus, the cutting blade may be made of a more brittle material, e.g. one that is harder but more susceptible to damage. The toughness may for example be assessed via a notched impact strength test such as the Charpy or the Izod test. The toughness of the knife material may be at least 5 times greater than the toughness of the cutting blade material, optionally at least 10 times greater or at least 50 times greater.

These factors can allow for differing blade materials for the replaceable cutting blade compared to the materials used for knives of traditional design, where the cutting edge is integrated into the knife. The cutting blade material can be selected with focus on the ability to provide a sharp edge rather than in relation to the ability to create a tough or stiff structure for the knife. The ability to provide a consistent high degree of sharpness could also prove essential for allowing use of "softer" materials for the insulation sheath, so that this concept will enhance cutting operations for existing cable types, as well as allowing for development of new insulation sheaths making use of differing materials.

The knife comprises the cutting edge provided by the removable cutting blade and it may include a cutting blade holder for holding the cutting blade. The cutting blade holder may be configured for engaging and releasing the cutting blade. By engaging and releasing the cutting blade, the cutting blade is allowed to be removable. The cutting blade holder may provide the increased stiffness of the knife as compared to the cutting blade. For example, it may be made of thicker and/or stronger material. In example embodiments the cutting blade holder is configured to hold the blade with its cutting edge securely in a required position and angle. This can hence replicate the configuration of current knife assemblies and the associated knife designs. In this way the cutting edge is replaced to maintain sharpness whilst the cutting process is always done within the intended design of the knife.

The cutting blade may be a disposable cutting blade, e.g. a single use or restricted use product. For example, the cutting blade may have a specification indicating a total length of cut (e.g. a preset number of metres) and/or a total number of cutting operations (e.g. a preset number of cone ends) before replacement. This means that the need for sharpening and/or sharpness monitoring can be dispensed with leading to advantages in productivity.

The cutting blade holder of the knife is configured for engaging and releasing the cutting blade to allow it to be removable and this may include use of a suitable mechanism, e.g. a physical clamping or holding mechanism or a mechanism using magnetic parts. It may include a slot for receiving the cutting blade. For example, the cutting blade holder may be configured to clamp onto the cutting blade from at least two sides thereof. This may include clamping onto an upper surface and a lower surface that extend across the cutting blade from its cutting edge. The upper surface and lower surface may for example be parallel surfaces, optionally planar surfaces. Alternatively, or additionally, the cutting blade holder may clamp onto the cutting blade at ends thereof, e.g. blade ends that extend in one dimension across the thickness of a cutting edge and extend in another dimension away from the cutting edge. In some implementations the cutting blade holder may use magnetic elements to aid alignment and/or retention of the cutting blade, which may hence be provided with a magnetically attractable part, e.g. a ferromagnetic part, or may be formed from magnetically attractable material. A magnet such as an electromagnet may be used to grip a surface of the cutting blade against a surface of the cutting blade holder.

In some examples the cutting blade may have multiple cutting edges. For example, there may be two cutting edges located opposite one another, e.g. at two sides of a rectangle or parallelogram, or more than two cutting edges forming sides of a polygonal shape, e.g. three cutting edges in a triangle or four in a rectangle or parallelogram. The cutting blade holder may be configured to hold the cutting blade in different rotational orientations in order to permit the cutting blade to be rotated to switch from a cutting edge to another cutting edge. This may involve switching from a cutting edge at one side to a cutting edge at another side. The rotation may turn the cutting blade about an axis normal to a principal surface of the cutting blade. Alternatively, or additionally, the rotation may flip the cutting blade to invert a principal surface of the cutting blade. In that way several cutting edges of the cutting blade may be used in sequence before the cutting blade is replaced. The cutting blade may be generally flat with upper and lower surfaces that are parallel with the flat shape of the cutting blade. These surfaces, which may each be a principal surface as mentioned above, may be planar surfaces.

The cutting blade and the cutting blade holder may include alignment features for engagement when the cutting blade is in the correct position on the cutting blade holder. The alignment features may for example include lugs and corresponding holes, or other physically interlocking features.

The cutting blade holder may comprise an angle adjustment mechanism for adjusting the angle of the cutting blade relative to an axial direction of the power cable and/or relative to a radial direction the power cable. Thus, the blade holder may be able to control the blade angle axially and/or in relation to incline against the surface. Controlling such angles may allow for control of the peeling waves that form on the surface as a flat blade cuts a cylindrical object. This can also allow a single knife assembly to adapt to power cables of different size and/or to insulation sheaths with differing material characteristics, as well as allowing for adjustment to suit the decreasing diameter that results as more material is peeled off.

The angle adjustment mechanism may include one or more threaded adjuster(s) and/or adjustment motors for adjustment of the blade angle relative to a fixed part of the cutting blade holder.

The knife may include a base plate for positioning between the cutting edge and the power cable. The base plate may for example be metal, in particular highly polished metal such as polished stainless steel, or another hard, polished material. When in use the base plate may be on the bottom of the knife assembly adjacent to the cutting edge and adjacent to the power cable in order to confront the newly cut surface. Thus, the base plate may sit behind the cutting edge in the direction of travel of the cutting edge when in use. Such a base plate may aid in controlling burnishing that otherwise occurs when a cutting blade portion (bottom of the cutting blade), drags along the newly cut surface and re-shapes the high spots in the roughness profile. This can replicate the burnishing effect of known knife designs. The base plate may for example be a part of the cutting blade holder, e.g. a part that clamps onto a lower surface of the cutting blade. The base plate may be heated or cooled, for example in order to enhance smoothness of the cut surface, and the device may hence include a heater or cooler for changing the temperature of the base plate.

As noted above, since the cutting blade is a replaceable part of the knife then added possibilities become open for the material of the cutting blade. In some examples the cutting blade, or the cutting edge thereof, is manufactured from synthetic single crystal sapphire, or diamond. The cutting blade, or the cutting edge thereof, may be manufactured from a ceramic or glass material, e.g. a glass material as known for microtomy blades. Metal alloys may also be used, including materials not suitable for existing knives due to their high wear rate and/or higher fragility. A PTFE coating may be used. Possible materials include stainless steel, carbon steel or tungsten carbide.

The cutting blade may have a non-straight cutting edge. It will be appreciated that there are added advantages for a replaceable/disposable cutting blade having a non-straight cutting edge, especially of complex form (e.g. curvature along the cutting edge and perpendicular to it. This is because such knives with replaceable cutting edges can always be kept sharp by means of frequent cutting blade replacement, whereas grinding/honing to re-sharpen can be difficult or impossible with complex shapes of cutting edge.

The cutting device may be configured to cut in various directions. The device may include a translation system for translational movement of the knife, e.g. radially and/or axially in relation to the power cable. For example, the cutting device may be configured to cut along a conical surface relative to the axis of the power cable, hence forming a cone shape, optionally with added pitch in order to cut in a spiral, e.g. as for a pencil sharpener. Alternative forms of cutting device may cut around the circumference, optionally without any pitch. Such devices may be used for forming steps or cones onto the insulation (depending on blade angle). The knife assembly may be for any known cutting operations including stationary cutting or for cutting with a pitch giving movement along the cable length. The knife assembly may be used for preparing cables for joints and/or terminations. It may be used for cutting any parts of the outer layers of the cable, such as for removing insulation to expose the conductor or for removing the outer semiconductor layer leaving an underlying insulation layer in place.

The rotation mechanism may be similar to the mechanism of known rotational peeling cutters. Thus, it may comprise a clamp for attachment to the power cable so that the knife assembly can be positioned against the material to be removed, as well as a rotation drive (e.g. a motor) for relative rotating motion of the knife assembly around the cable. The rotation mechanism may for example be as in known cable preparation tools as provided by ALROC SAS of France or HIVOTEC AG of Switzerland.

The cutting blade is for cutting material from the insulation sheath of the power cable and thus may be a blade for cutting a polymer material, for example a blade for cutting thermoplastic materials and/or XLPE. In examples the power cable has an insulation sheath comprising one or more layers of semiconducting material as well as at least one layer of insulating material. The semiconducting material may comprise a plastic matrix that is similar (or identical) to a plastic used for the insulating material, with a filler comprising semiconducting or conductive inclusions such as carbon black, carbon nanotubes, graphene, or metal particles. An example of a thermoplastic material is a polyethylene-based thermoplastic blend.

The power cables may be medium voltage of high voltage power cables, e.g. cables rated at 1 kV and above. In some examples they are HVDC or HVAC cables for subsea applications. For example, they may be power cables of the types described in EP4202958. Where the power cable is a high voltage cable then it may be a cable for carrying electrical power at voltages of more than 30 kV, especially at more than 300 kV, for example up to 800 kV. The power cables may for example have conductors with a diameter in the range 25mm to 70mm and an overall diameter of at least 15mm larger than the conductor diameter, typically at least 20mm larger. The overall diameter may be in the range 40mm to 150mm. This overall diameter may include the conductor and the insulation sheath layers as well as optionally amour layer(s) and/or an outer serving layer.

Viewed from a second aspect, the present invention relates to a method comprising use of the device of the first aspect for removal of material from insulation sheaths of power cables. In one example the method comprises:
- coupling the power cable to the knife assembly; and
- using the rotation mechanism for rotational movement of the knife assembly relative to the power cable in order to engage the cutting edge with the material of the insulation sheath and thereby peel off material from the insulation sheath.

The method may include replacing the cutting edge by removing the cutting blade from the knife and replacing it with a new cutting blade. The knife may remain in place on the knife assembly during replacement of the cutting blade. The method may comprise using a device with any or all of the optional features set out above. The method may include monitoring usage of the cutting blade and replacing it in accordance with a specification thereof. This replacement may be done after a preset number of metres of cut and/or after a total number of cutting operations such as a preset number of cone ends. The angle of the cutting blade may be adjusted, e.g. via an angle adjustment mechanism of the cutting blade holder, in order to set a required angle of the cutting blade relative to an axial direction of the power cable and/or relative to a radial direction the power cable.

### Short description of the drawings

In the following description this invention will be further explained by way of exemplary embodiments shown in the drawings:
- Figure 1: shows a known tool for cutting away insulation from a power cable;
- Figure 2: shows the layered structure of a typical power cable;
- Figure 3: is a schematic side view of a power cable with a cone end;
- Figure 4: illustrates a proposed cutting device;
- Figure 5: shows a knife with a replaceable blade; and
- Figure 6: shows possible shapes for replaceable cutting blades.

### Detailed description of example embodiments

Often, it is desirable to transmit power via subsea cables extending over long distances. Transferring power over long distances requires that separate cable lengths be joined together. For submarine applications the cables may be high voltage direct current (HVDC) cables, high voltage alternating current (HVAC) cables, extra high voltage cables (EHV), medium-voltage cables or low-voltage cables. The power cables may be power transmission cables having a rated voltage of 30 kV or higher.

As shown in Figure 2, an electric power cable 1 comprises an elongated electrical conductor 2, typically copper or aluminium, surrounded by a plurality of insulating/protective layers. These layers are positioned successively and coaxially around the conductor 2, and they include: a first semiconducting layer 3 referred to as "inner semiconducting layer" or ISC, an electrically insulating layer 4 referenced as INS, a second semiconducting layer 5 referred to as "outer semiconducting layer" or OCS. Single phase cables comprise one conductor 2. The insulation layer 4 is located between the semiconducting layers 3, 5. Normally, the conductor 2 has a generally circular cross section. It has a longitudinal form with an axial direction 12 along a centreline thereof. A radial direction of the cable 1 is a direction perpendicular to the axial direction 12. The surrounding insulation 4 and semi-conducting layers 3, 5 usually have a cross-section with a similar shape to the conductor 2, i.e. normally being generally circular. The first semiconducting layer 3, the insulation layer 4 and the second semiconducting layer 5 are often referred to as an insulation system, or an insulation sheath. These power cables 1 are typically produced by triple extrusion placing the insulation sheath 3, 4, 5 directly onto the conductor 2.

Added layers may also be present such as layers for adding mechanical strength and for protecting the cable against physical damage as well as chemical damage, e.g. corrosion. In this case there is an earthing and/or protective metal shield 6 and an external protective cladding 7. These added layers can be provided at a later stage of manufacture, e.g. after a joining operation to make a longer length of the inner cable parts including the conductor 2 and the insulation sheath 3, 4, 5. Thus, when processing such cables in some operations a first step is removal of the outer protective layers 6, 7 and in other operations the initial form of the cable is without such layers.

The insulation layer 4 should have insulation properties and essentially no conductivity or very low conductivity. The semi-conducting layers 3, 5 may be rendered semi-conducting by using fillers having conducting properties, advantageously using a matrix of similar (or the same) material to the insulation layer in order to form a suitable bond between the layers. A typical insulating layer 4 may be made of a material having a conductivity of between 10⁻¹⁶ and 10⁻⁹ S/m (at 20 °C). The semiconductive layers 3, 5 may be made of a material having a conductivity between 10⁻⁵ and 10³ S/m (at 20 °C), preferably between 10⁻³ and 10 S/m (at 20 °C). The semiconductive layers 3, 5 should have a conductivity that is lower than that of the conductor 2 but higher than that of the insulation layer 4. The conductivity of the semiconductive layers 3, 5 will typically be at least 100 times higher than that of the insulating layer 4, optionally at least 1000 times higher. The conductor 2 may have a conductivity of more than 10³ S/m (at 20 °C).

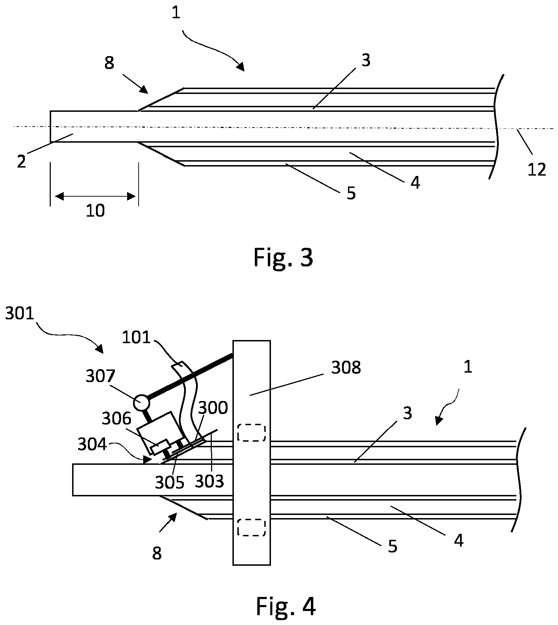

When joining cables 1 of this type the cable ends are prepared by removing a part of the insulation sheath 3, 4, 5 and leaving "cone ends", i.e. tapering sections 8 as seen in Figure 3. This shows a side profile of a section of power cable 1 with the conductor 2 and insulation sheath 3, 4, 5. There is a region of exposed conductor 10 where the insulation sheath 3, 4, 5 has been removed, e.g. via a cutting device as described herein, and a cone end 8 is formed by peeling away material from the insulation sheath 3, 4, 5 at an angle. The cone end 8 provides for stress relief as well as providing a suitable surface for forming replacement layers of the insulation sheath. A prior art tool for cutting away material to form this cone end is discussed above and is shown in Figure 1.

The inventors have realised that a dominant criterion for the knife assembly is to maintain a blade of the right location and form with high degree of sharpness. The sharpness degree correlates/impacts with the roughness of the manufactured surfaces, and ease of cutting, manifested by the loading/force generated on the knife and on its cutting edge. Softer cable materials with lower modulus may be particularly difficult to cut and shape via this method and high sharpness of the cutting edge is essential for such materials. The quality of the cutting blade has been proven to directly impact the surface roughness and ease of manufacturing, the former of which also is known to strongly impact the electrical performance of the resulting manufactured components, e.g. by increasing the risk of voids or other imperfections when a flexible joint is formed at a cut end of a cable.

With extended use the sharpness of the cutting edge will deteriorate. The timespan for deterioration to an unusable state depends on the blade material and the material that is being cut. The hardest blade materials are often preferred to extend their lifespan. However, this brings new issues such as brittleness of the blade (such as with ceramics, bringing the risk for fracture under stress), or, making the (re) sharpening process of cutting edge extremely challenging. Moreover, the cutting blades and in particular their edges are always in risk of damage. For example, chips can easily form when the operator may touch the blade against the wrong material or when abrasive particles are present on the object to be stripped/cut.

Cutting blades can in some cases be re-sharpened with different knife-sharpening tools but this is an extremely operator dependent method and the outcome of re-sharpening can vary. Sharpening of used blades is in any event not a favourable solution as the removal of material to re-shape the cutting edge thereof will inevitably change the shape of the blade and change the location of the cutting edge relative to other parts of the knife assembly, rendering the knife assembly less effective.

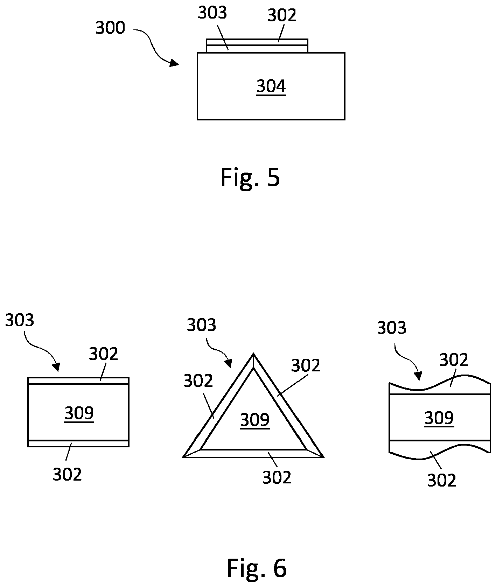

Figure 4 depicts a schematic view of a rotational cutting device including a knife assembly 301 for peeling away material 101, such as for forming the cone end 8. This provides a knife assembly 301 for use in place of the known knife assembly 201 of Figure 1. The knife assembly 301 is held on a rotation mechanism 308 for providing rotational movement relative to the power cable 1, which in this example is similar to the power cable 1 of Figure 1. The knife assembly 301 of Figure 4 has a knife 300 that cuts into the material of the cable, e.g. the insulation sheath 3, 4, 5, in a similar way to the knife 203 shown in Figure 1. However, the knife 300 differs in that it comprises a replaceable cutting blade 303, which can be detached from a cutting blade holder 304. This knife 300 is depicted in schematic form in Figure 5 where the cutting blade holder 304 and the cutting blade 303 are shown in plan view, i.e. with the cutting edge 302 extending along the page.

In Figure 4 the cutting edge 302 and cutting blade 303 are seen side on. They are configured to slice away a peeling 101 of the insulation material in order to shape a cone end 8. The knife assembly 301 uses disposable cutting blades 303, and a cutting blade holder 304 that holds the cutting blade 303 and its cutting edge 302 securely in the right position and angle. The disposable cutting blades 303 can be readily available blades chosen on basis of quality, hardness, and/or shape characteristics, such as blades designed for microtomy or surgery, for example. Alternative blade types also include replaceable blades provided for woodworking or razorblades for shaving. Such blades 303 can be manufactured in high volumes so that it is cost effective and efficient to replace the cutting blade 303 (or rotate a blade 303 to use a new cutting edge 302) on a regular basis in order to maintain optimum sharpness.

The knife 300 comprising the cutting blade 303 and its cutting blade holder 304 can mimic the existing cutting tools in relation to orientation and position of the cutting edge 302, while firmly holding the replaceable cutting blade 303, e.g. by clamping mechanically from both sides.

The cutting blade holder 304 includes a base plate 305 of a highly polished metal on its bottom adjacent to the cutting edge 302, but behind the cutting edge 302 in the direction of cutting. Burnishing that occurs when a blade portion (bottom of the knife), drags along the newly cut surface, and re-shapes the high spots in the roughness profile, can be controlled via this dedicated base plate 305. There may be a heater 306 (or a cooler ) so that the base plate 305 can be heated (or cooled) if needed for the desired effect (e.g. to promote high smoothness). An angle adjustment system 307 is included so that the blade holder 304 may control the blade angle both axially and in terms of incline against the surface.

The knife assembly 301 is mounted to the power cable 1 via a rotation mechanism 308 that moves the cutting edge 302 relative to the power cable 1 in a rotating movement in order to perform the removal of material. This rotation mechanism 308 may have a similar form to that used for known rotational cutting tools.

A knife sharpness tester may be used to benchmark and to find the optimal blades for particular materials, as well as for performing regular quality checks on new knife batch deliveries. Such a knife sharpness tester tests the force generated when The proposed rotational cutting device can be used for all medium voltage and high voltage extruded cable installation such as for cables for carrying power at 1 kV and above. This can be used for both thermoplastic and XLPE, as well as other insulation types. Different cutting edges can be provided so that the system can be adapted for use in all peeling and all cutting operations where it is required to cut into cable insulation. This includes all cutting or peeling of cable sheath or other cable plastic layers.

As noted above in Figure 4 the cutting blade 303 is shown side on, i.e. facing along the cutting plane, whereas Figure 5 shows one example in plan view, looking perpendicular to the cutting plane. Figure 6 shows three examples illustrating the shapes of possible cutting blades 303 in plan view, i.e. perpendicular to the cutting plane. Thus, in Figure 6 it is either the upper or lower surface 309 of the cutting blades 303 that is visible. Typically, the upper and lower surfaces 309 will be similar in form. They can be held in a cutting blade holder 304 as illustrated in Figure 5. In Figure 5 there are three blades 303. This shows the variety of blade forms that may be used. One has a rectangular form and two straight cutting edges 302, one with a triangular form and three straight cutting edges 302, and one with a more complex form with non-linear cutting edges 302.

It will be appreciated that by tailor designing new cutting blades 303 with bespoke cutting edges 302, along with the associated blade holding devices 304 then identical performance can be obtained compared to known systems along with new benefits including:
- Frequent cutting blade replacement limits the degree of wear and ensures a constant sharp edge for consistent quality of cut
- No need for complex and time staking re-sharpening methods due to single use
- Limited need for sharpness inspection as the cutting blades see limited use before replacement
- Possibility to select blades of extreme sharpness and/or hardness
- The cutting edges can be manufactured with different processes compared with today's methods, giving benefits in relation to costs and quality/sharpness
- Possibility of new materials for the cutting edge, such as synthetic single crystal sapphire, or diamond, which can offer superior sharpness over metals
- Non-straight cutting edges can be use while ensuring that such cutting edges can be maintained to be extremely sharp by means of frequent cutting blade replacement.

### List of reference numbers:

1 Power cable
2 Electrical conductor
3 Inner semiconducting layer
4 Electrical insulating layer
5 Outer semiconducting layer
6 Metal shield
7 Protective cladding
8 Cone end
10 Exposed conductor
12 Axial direction
100 Power cable in cutting machine
101 Peeling
200 Prior art cutting machine
201 Prior art knife assembly
202 Prior art cutting edge
203 Prior art knife
300 Knife
301 Knife assembly
302 Cutting edge
303 Removable cutting blade
304 Cutting blade holder
305 Base Plate
306 Heater (or cooler)
307 Angle adjustment system
308 Rotation mechanism
309 Upper/lower surface

## Claims

1. A rotational cutting device for the removal of material from an insulation sheath (3, 4, 5) of a power cable (1, 100), the device comprising:
- a knife assembly (301) having a knife (300) comprising a cutting edge (302) for peeling off material (101) from the insulation sheath (3, 4, 5); and
- a rotation mechanism (308) for rotational movement of the knife assembly (301) relative to the power cable (1, 100);
wherein the cutting edge (302) of the knife (300) is provided by a removable cutting blade (303).

2. The rotational cutting device as claimed in claim 1, wherein the removable cutting blade (303) is a microtomy blade or a surgical blade.

3. The rotational cutting device as claimed in claim 1 or 2, wherein the removable cutting blade (303), when detached from the knife (300), is more flexible and/or weaker than the knife as a whole.

4. The rotational cutting device as claimed in claim 1, 2 or 3, wherein the knife (300) includes a cutting blade holder (304) for holding the cutting blade (303), and wherein the cutting blade holder (304) is configured for engaging and releasing the cutting blade (303).

5. The rotational cutting device as claimed in claim 4, wherein the cutting blade holder (304) is configured to clamp onto the cutting blade (303) at an upper surface and a lower surface (309) that extend across the cutting blade (303) from its cutting edge (302).

6. The rotational cutting device as claimed in claim 4 or 5, wherein the cutting blade holder (304) comprises an angle adjustment mechanism (307) for adjusting the angle of the cutting blade (303) relative to an axial direction (12) of the power cable (1, 100) and/or relative to a radial direction of the power cable (1, 100).

7. The rotational cutting device as claimed in any preceding claim, wherein the cutting blade (303) has multiple cutting edges (302) and the cutting blade holder (304) is configured to hold the cutting blade (303) in different rotational orientations in order to permit the cutting blade (303) to be rotated to switch from a first cutting edge (302) to another cutting edge (302).

8. The rotational cutting device as claimed in any preceding claim, wherein the cutting blade (303) comprises two cutting edges (302) located opposite one another, or more than two cutting edges (302) forming sides of a polygonal shape.

9. The rotational cutting device as claimed in any preceding claim, wherein knife (300) includes a base plate (305) for positioning between the cutting edge (302) and the power cable (1, 100) such that when in use the base plate (305) is on the bottom of the knife assembly (301) adjacent to the cutting edge (302) and adjacent to the power cable (1, 100).

10. The rotational cutting device as claimed in claim 9, wherein the device comprises a heater and/or a cooler (306) for changing the temperature of the base plate (305).

11. The rotational cutting device as claimed in any preceding claim, wherein the cutting blade (303), or the cutting edge (302) thereof, is manufactured from synthetic sapphire or diamond.

12. The rotational cutting device as claimed in any of claims 1 to 10, wherein the cutting blade (303), or the cutting edge (302) thereof, is manufactured from a ceramic or a glass material.

13. The rotational cutting device as claimed in any preceding claim, wherein the cutting blade (303) comprises a non-straight cutting edge (302) with curvature along the cutting edge (302) and/or curvature perpendicular to the cutting edge (302).

14. A method comprising use of the device of any preceding claim for removal of material (101) from insulation sheaths (3, 4, 5) of power cables (1, 100).

15. The method as claimed in claim 14, comprising replacing the cutting edge (302) by removing the cutting blade (303) from the knife (300) and replacing it with a new cutting blade (303).
